# EUROPEAN PATENT APPLICATION

(11) **EP 4 277 289 A1**
(43) Date of publication of application: **15.11.2023**
(21) Application number: 21927261.4
(22) Date of filing: 26.02.2021
(51) Int. Cl.: H04N 21/647

(54) **MEDIA PARAMETER ADJUSTMENT METHOD AND APPARATUS**

(71) Applicant: Huawei Technologies Co., Ltd., Shenzhen, Guangdong 518129 (CN)
(72) Inventor: CHEN, Zehao, Shenzhen, Guangdong 518129 (CN); LI, Yongcui, Shenzhen, Guangdong 518129 (CN); NI, Hui, Shenzhen, Guangdong 518129 (CN)
(74) Representative: Gill Jennings & Every LLP
(86) International application number: PCT/CN2021/078121
(87) International publication number: WO 2022/178824

(57) **Abstract**

Embodiments of this application provide a method and an apparatus for adjusting a media parameter. The method includes: A terminal device obtains network information from a network data analytics function network element, where the network information includes one or more of the following: network performance prediction information or a media parameter, the network performance prediction information indicates prediction of a network status, and the media parameter is used for controlling, selecting, transmitting, or buffering media data. The terminal device processes the media data based on the network information. In embodiments of this application, a freezing phenomenon can be reduced by adjusting a media parameter, and quality of experience of a user can be improved.

## Description

### TECHNICAL FIELD

This application relates to the field of communication technologies, and in particular, to a method and an apparatus for adjusting a media parameter.

### BACKGROUND

During video play, when no data is available in a buffer of a client player for play, a freezing phenomenon occurs, and in this case, the player buffers media content again.

The freezing phenomenon has significant impact on quality of experience (quality of experience, QoE) of a user. According to survey results of the freezing phenomenon, compared with a user who has not experienced freezing, a user who has experienced a rebuffering delay after freezing plays fewer videos, and duration of the played videos is shorter. Therefore, how to reduce freezing phenomenon and improve quality of experience of a user is a technical problem that is being resolved by a person skilled in the art.

### SUMMARY

Embodiments of this application disclose a method and an apparatus for adjusting a media parameter, to reduce a freezing phenomenon and improve quality of experience of a user.

A first aspect of embodiments of this application discloses a method for adjusting a media parameter, including: A terminal device obtains network information from a network data analytics function network element, where the network information includes one or more of the following: network performance prediction information or a media parameter, the network performance prediction information indicates prediction of a network status, and the media parameter is used for controlling, selecting, transmitting, or buffering media data. The terminal device processes the media data based on the network information.

In the foregoing method, the terminal device may obtain the network information from the network data analytics function network element, and adjust a media parameter of a client in advance based on the network performance prediction information in the network information when the network status is about to deteriorate, or directly adjust the media parameter of the client based on the media parameter in the network information, to reduce occurrence of a freezing phenomenon and improve user experience.

In a possible implementation, that a terminal device obtains network information from a network data analytics function network element includes: The terminal device sends first indication information to a first network element, where the first indication information indicates to request the network information, the first network element includes an access and mobility management function network element, a session management function network element, or an application network element, and the application network element includes an application function network element or an application server. The terminal device receives the network information from the first network element.

In the foregoing method, the terminal device may quickly trigger, by sending the first indication information to the first network element, the first network element to subscribe to the network information from the network data analytics function network element.

In another possible implementation, the first indication information further indicates a type of the network information.

In the foregoing method, after receiving the first indication information, the first network element may quickly determine the type of the network information based on the first indication information, to reduce signaling overheads.

In another possible implementation, the terminal device sends information about a type of the network information to the first network element.

In the foregoing method, the terminal device sends the information about the type of the network information to the first network element, so that the first network element can quickly determine that the terminal device requires the network performance prediction information and/or the media parameter, to quickly make a response.

In another possible implementation, the media parameter includes one or more of the following: a bit rate, a maximum buffer, a minimum buffer, or a buffer threshold.

A second aspect of embodiments of this application discloses a method for adjusting a media parameter, including: A network data analytics function network element receives first information from a first network element, where the first information is used for obtaining network information, the network information includes one or more of the following: network performance prediction information or a media parameter, the network performance prediction information indicates prediction of a network status, the media parameter is used for controlling, selecting, transmitting, or buffering media data, the first network element includes an access and mobility management function network element, a session management function network element, or an application network element, and the application network element includes an application function network element or an application server. The network data analytics function network element sends the network information to a terminal device.

In the foregoing method, after receiving the first information from the first network element, the network data analytics function network element determines the network information, and then sends the network information to the terminal device. Correspondingly, after receiving the network information, the terminal device may adjust a media parameter of a client in advance based on the network performance prediction information in the network information when the network status is about to deteriorate, or directly adjust the media parameter of the client based on the media parameter in the network information, to reduce occurrence of a freezing phenomenon and improve user experience.

In a possible implementation, the media parameter includes one or more of the following: a bit rate, a maximum buffer, a minimum buffer, or a buffer threshold.

In another possible implementation, the method further includes: The network data analytics function network element determines the media parameter.

In another possible implementation, that the network data analytics function network element determines the media parameter includes: The network data analytics function network element receives media information from the application network element, where the media information includes one or more of the following: total media duration, a bit rate, or a frame rate. The network data analytics function network element determines the media parameter based on the network performance prediction information and the media information.

In another possible implementation, the method further includes: The network data analytics function network element sends a request message to the application network element to request the media information.

In another possible implementation, the first information includes an analytics identifier.

In another possible implementation, the first information includes one or more of the following: a terminal identifier, second indication information, or third indication information, the second indication information indicates to send the network information to the terminal device corresponding to the terminal identifier, and the third indication information indicates to send the network information to the first network element.

In the foregoing method, after receiving the first information from the first network element, the network data analytics function network element may quickly make a response based on content included in the first information, and send the network information to the terminal device and/or the first network element corresponding to the terminal identifier, thereby reducing a processing delay.

In another possible implementation, the method further includes: The network data analytics function network element sends fourth indication information to the first network element, where the fourth indication information indicates the first network element to send the network information to the terminal device.

In the foregoing method, the network data analytics function network element sends the network information to the terminal device through the first network element, so that the terminal device adjusts the media parameter of the client, to reduce a freezing phenomenon and improve user experience.

A third aspect of embodiments of this application discloses a method for adjusting a media parameter, including: An application network element determines a media parameter, where the media parameter is used for controlling, selecting, transmitting, or buffering media data, and the application network element includes an application function network element or an application server. The application network element sends the media parameter to a terminal device.

In the foregoing method, the application network element determines the media parameter, and then sends the media parameter to the terminal device, so that the terminal device adjusts a media parameter of a client based on the media parameter, to reduce a freezing phenomenon and improve user experience.

In a possible implementation, that an application network element determines a media parameter includes: The application network element receives network performance prediction information from a network data analytics function network element, where the network performance prediction information indicates prediction of a network status. The application network element determines the media parameter based on the network performance prediction information and media information, where the media information includes one or more of the following: total media duration, a bit rate, or a frame rate.

A fourth aspect of embodiments of this application discloses a method for adjusting a media parameter, including: A first network element sends first information to a network data analytics function network element, where the first information is used for obtaining network information, the network information includes one or more of the following: network performance prediction information or a first media parameter, the network performance prediction information indicates prediction of a network status, the first network element includes an access and mobility management function network element, a session management function network element, or an application network element, and the application network element includes an application function network element or an application server. The first network element receives the first media parameter from the network data analytics function network element, where the first media parameter is used for controlling, selecting, transmitting, or buffering media data. The first network element sends a second media parameter to a terminal device, where the second media parameter is determined based on the first media parameter, and the second media parameter is used for controlling, selecting, transmitting, or buffering the media data.

In the foregoing method, the first network element sends the first information to the network data analytics function network element, to subscribe to the network information, receives the first media parameter from the network data analytics function network element, determines the second media parameter based on the first media parameter, and sends the second media parameter to the terminal device, so that the terminal device adjusts a media parameter of a client based on the second media parameter, to reduce a freezing phenomenon and improve user experience.

A fifth aspect of embodiments of this application discloses a method for adjusting a media parameter, including: A network data analytics function network element receives first information from a first network element, where the first information is used for obtaining network information, the network information includes one or more of the following: network performance prediction information or a first media parameter, the network performance prediction information indicates prediction of a network status, the first network element includes an access and mobility management function network element, a session management function network element, or an application network element, and the application network element includes an application function network element or an application server. The network data analytics function network element sends the first media parameter to the first network element, where the first media parameter is used for controlling, selecting, transmitting, or buffering media data, and the first media parameter is used by the first network element to determine a second media parameter, and the second media parameter is used by a terminal device to control, select, transmit, or buffer the media data.

In the foregoing method, the network data analytics function network element receives the first information from the first network element, and then sends the first media parameter to the first network element, and then the first network element determines the second media parameter based on the first media parameter, and sends the second media parameter to the terminal device, so that the terminal device adjusts a media parameter of a client based on the second media parameter, to reduce a freezing phenomenon and improve user experience.

A sixth aspect of embodiments of this application discloses an apparatus for adjusting a media parameter, including: a processing unit, configured to obtain network information from a network data analytics function network element, where the network information includes one or more of the following: network performance prediction information or a media parameter, the network performance prediction information indicates prediction of a network status, and the media parameter is used for controlling, selecting, transmitting, or buffering media data, where the processing unit is further configured to process the media data based on the network information.

In a possible implementation, the apparatus further includes a communication unit. The communication unit is configured to send first indication information to a first network element, where the first indication information indicates to request the network information, the first network element includes an access and mobility management function network element, a session management function network element, or an application network element, and the application network element includes an application function network element or an application server. The communication unit is further configured to receive the network information from the first network element.

In another possible implementation, the first indication information further indicates a type of the network information.

In another possible implementation, the communication unit is further configured to send information about a type of the network information to the first network element.

In another possible implementation, the media parameter includes one or more of the following: a bit rate, a maximum buffer, a minimum buffer, or a buffer threshold.

For technical effects brought by the sixth aspect or the possible implementations, refer to the descriptions of the technical effects brought by the first aspect or the corresponding implementations.

A seventh aspect of embodiments of this application discloses an apparatus for adjusting a media parameter, including: a communication unit, configured to receive first information from a first network element, where the first information is used for obtaining network information, the network information includes one or more of the following: network performance prediction information or a media parameter, the network performance prediction information indicates prediction of a network status, the media parameter is used for controlling, selecting, transmitting, or buffering media data, the first network element includes an access and mobility management function network element, a session management function network element, or an application network element, and the application network element includes an application function network element or an application server. The communication unit is further configured to send the network information to a terminal device.

In a possible implementation, the media parameter includes one or more of the following: a bit rate, a maximum buffer, a minimum buffer, or a buffer threshold.

In another possible implementation, the apparatus further includes a processing unit, and the processing unit is configured to determine the media parameter.

In another possible implementation, the communication unit is further configured to receive media information from the application network element, where the media information includes one or more of the following: total media duration, a bit rate, or a frame rate. The processing unit is configured to determine the media parameter based on the network performance prediction information and the media information.

In another possible implementation, the communication unit is further configured to send a request message to the application network element to request the media information.

In another possible implementation, the first information includes an analytics identifier.

In another possible implementation, the first information includes one or more of the following: a terminal identifier, second indication information, or third indication information, the second indication information indicates to send the network information to the terminal device corresponding to the terminal identifier, and the third indication information indicates to send the network information to the first network element.

In another possible implementation, the communication unit is further configured to send fourth indication information to the first network element, where the fourth indication information indicates the first network element to send the network information to the terminal device.

For technical effects brought by the seventh aspect or the possible implementations, refer to the descriptions of the technical effects brought by the second aspect or the corresponding implementations.

An eighth aspect of embodiments of this application discloses an apparatus for adjusting a media parameter, including: a processing unit, configured to determine a media parameter, where the media parameter is used for controlling, selecting, transmitting, or buffering media data; and a communication unit, configured to send the media parameter to a terminal device.

In a possible implementation, the communication unit is configured to receive network performance prediction information from a network data analytics function network element, where the network performance prediction information indicates prediction of a network status. The processing unit is configured to determine the media parameter based on the network performance prediction information and media information, where the media information includes one or more of the following: total media duration, a bit rate, or a frame rate.

For technical effects brought by the eighth aspect or the possible implementations, refer to the descriptions of the technical effects brought by the third aspect or the corresponding implementations.

A ninth aspect of embodiments of this application discloses an apparatus for adjusting a media parameter, including: a processing unit, configured to send first information to a network data analytics function network element through a communication unit, where the first information is used for obtaining network information, the network information includes one or more of the following: network performance prediction information or a first media parameter, the network performance prediction information indicates prediction of a network status, the first network element includes an access and mobility management function network element, a session management function network element, or an application network element, and the application network element includes an application function network element or an application server; and the communication unit, configured to receive the first media parameter from the network data analytics function network element, where the first media parameter is used for controlling, selecting, transmitting, or buffering media data. The communication unit is configured to send a second media parameter to a terminal device, where the second media parameter is determined based on the first media parameter, and the second media parameter is used for controlling, selecting, transmitting, or buffering the media data.

For technical effects brought by the ninth aspect or the possible implementations, refer to the descriptions of the technical effects brought by the fourth aspect or the corresponding implementations.

A tenth aspect of embodiments of this application discloses an apparatus for adjusting a media parameter, including: a processing unit, configured to receive first information from a first network element through a communication unit, where the first information is used for obtaining network information, the network information includes one or more of the following: network performance prediction information or a first media parameter, the network performance prediction information indicates prediction of a network status, the first network element includes an access and mobility management function network element, a session management function network element, or an application network element, and the application network element includes an application function network element or an application server; and the communication unit, configured to send the first media parameter to the first network element, where the first media parameter is used for controlling, selecting, transmitting, or buffering media data, and the first media parameter is used by the first network element to determine a second media parameter, and the second media parameter is used by a terminal device to control, select, transmit, or buffer the media data.

For technical effects brought by the tenth aspect or the possible implementations, refer to the descriptions of the technical effects brought by the fourth aspect or the corresponding implementations.

An eleventh aspect of embodiments of this application discloses an apparatus for adjusting a media parameter. The apparatus includes at least one processor and a communication interface, and the at least one processor is configured to invoke a computer program stored in at least one memory, to enable the apparatus to implement the method according to any one of the first aspect or the possible implementations of the first aspect.

A twelfth aspect of embodiments of this application discloses an apparatus for adjusting a media parameter. The apparatus includes at least one processor and a communication interface. The at least one processor is configured to invoke a computer program stored in at least one memory, to enable the apparatus to implement the method according to any one of the second aspect or the possible implementations of the second aspect.

A thirteenth aspect of embodiments of this application discloses an apparatus for adjusting a media parameter. The apparatus includes at least one processor and a communication interface. The at least one processor is configured to invoke a computer program stored in at least one memory, to enable the apparatus to implement the method according to any one of the third aspect or the possible implementations of the third aspect.

A fourteenth aspect of embodiments of this application discloses an apparatus for adjusting a media parameter. The apparatus includes at least one processor and a communication interface, and the at least one processor is configured to invoke a computer program stored in at least one memory, to enable the apparatus to implement the method according to any one of the fourth aspect or the possible implementations of the fourth aspect.

A fifteenth aspect of embodiments of this application discloses an apparatus for adjusting a media parameter. The apparatus includes at least one processor and a communication interface. The at least one processor is configured to invoke a computer program stored in at least one memory, to enable the apparatus to implement the method according to any one of the fifth aspect or the possible implementations of the fifth aspect.

A sixteenth aspect of embodiments of this application discloses a system for adjusting a media parameter. The system includes the apparatus for adjusting a media parameter according to the sixth aspect or the eleventh aspect and the apparatus for adjusting a media parameter according to the seventh aspect or the twelfth aspect, or the apparatus for adjusting a media parameter according to the ninth aspect or the fourteenth aspect, and the apparatus for adjusting a media parameter according to the tenth aspect or the fifteenth aspect.

A seventeenth aspect of embodiments of this application discloses a chip system. The chip system includes at least one processor and a communication interface. The at least one processor is configured to invoke a computer program stored in at least one memory, to implement the method according to any one of any foregoing aspect or the possible implementations of the any aspect.

An eighteenth aspect of embodiments of this application discloses a computer-readable storage medium. The computer-readable storage medium stores program instructions. When the program instructions are run on a processor, the method according to any one of any foregoing aspect or the possible implementations of the any aspect is implemented.

A nineteenth aspect of embodiments of this application discloses a computer program product. When the computer program product runs on a processor, the method according to any one of any foregoing aspect or the possible implementations of the any aspect is implemented.

### BRIEF DESCRIPTION OF DRAWINGS

FIG. 1 is a schematic diagram of an architecture of a network system according to an embodiment of this application;
FIG. 2 shows an architecture of interaction between an NWDAF network element and another network element according to an embodiment of this application;
FIG. 3 shows a method for adjusting a media parameter according to an embodiment of this application;
FIG. 4 shows another method for adjusting a media parameter according to an embodiment of this application;
FIG. 5 shows another method for adjusting a media parameter according to an embodiment of this application;
FIG. 6 shows another method for adjusting a media parameter according to an embodiment of this application;
FIG. 7 is a schematic diagram of a structure of an apparatus for adjusting a media parameter according to an embodiment of this application; and
FIG. 8 is a schematic diagram of a structure of an apparatus for adjusting a media parameter according to an embodiment of this application.

### DESCRIPTION OF EMBODIMENTS

The following describes embodiments of this application with reference to the accompanying drawings in embodiments of this application.

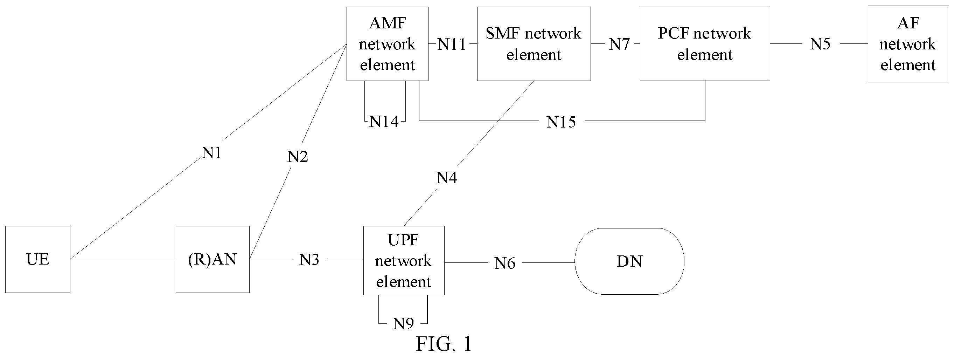

FIG. 1 is a schematic diagram of an architecture of a network system. The network system includes an access network and a core network. The access network is used to implement a function related to radio access. The core network mainly includes the following key logical network elements: an access and mobility management function (access and mobility management function, AMF) network element, a session management function (session management function, SMF) network element, a user plane function (user plane function, UPF) network element, a policy control function (policy control function, PCF) network element, an application function (application function, AF) network element, and a network data analytics function (network data analytics function, NWDAF) network element. Network elements in FIG. 1 are described below.

User equipment (user equipment, UE) may be a terminal device, for example, a mobile phone or an internet of things terminal device.

A radio access network (radio access network, (R)AN) device is a device that provides wireless access for a terminal device, and includes, but is not limited to, a 5G base station (next generation NodeB, gNB), a wireless fidelity (wireless fidelity, Wi-Fi) access point (access point, AP), a worldwide interoperability for microwave access (worldwide interoperability for microwave access, WiMAX) base station (base station, BS), and the like.

The AMF network element is mainly responsible for mobility management in a mobile network, for example, user location update, registration of a user with a network, and user switching.

The SMF network element is mainly responsible for session management in the mobile network, for example, session establishment, modification, and release. For example, specific functions are allocation of an IP address to a user and selection of a UPF that provides a packet forwarding function.

The PCF network element supports unified policy management for network behavior, and is mainly responsible for providing a policy, for example, a quality of service (quality of service, QoS) policy, a slice selection policy, for the AMF network element and the SMF network element.

The UDM network element is configured to store user data such as subscription information and authentication/authorization information.

The AF network element is mainly responsible for providing a service to a 3rd generation partnership project (3rd generation partnership project, 3GPP) network, for example, affecting service routing and interacting with the PCF network element to perform policy control.

The NWDAF network element is configured to provide network analytics information to a network function (network function, NF) network element, for example, an AMF network element, an SMF network element, and a PCF network element. The NWDAF network element may notify the subscribed NF network element of the network analytics information, or the NF network element may directly obtain specific network analytics information from the NWDAF network element.

The UPF network element is mainly responsible for processing a user packet, such as forwarding and charging for the user packet.

A data network (data network, DN) is mainly responsible for providing data transmission services to users, for example, an IP multimedia service (IP multimedia service, IMS) and an internet (internet). The UE accesses the DN by establishing sessions (session) between the UE, the RAN, the UPF, and the DN.

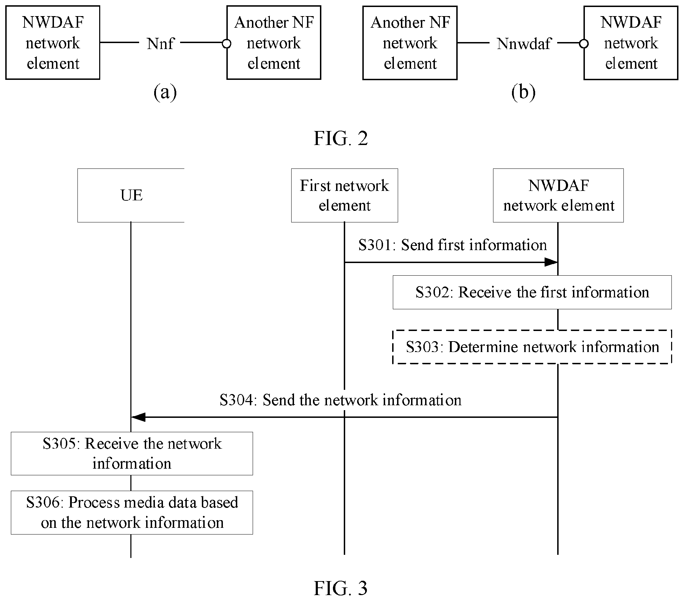

FIG. 2 shows an architecture of interaction between an NWDAF network element and another network element. (a) in FIG. 2 is an architecture used for data collection, to be specific, the NWDAF network element invokes a service of the another network element to collect input information required for network analytics. (b) in FIG. 2 is an architecture used for data openness, to be specific, the NWDAF network element sends, by providing an NWDAF service, analytics data to a network element that subscribes to or requests the analytics data. The analytics data includes gNB status information, gNB resource usage, and statistics or predictions of communication performance and mobility performance, or provides statistics or predictions of a quantity of UEs located in an area of interest.

The following explains and describes some terms defined in this application, to facilitate understanding.

It should be noted that a client media player in this application is deployed on a terminal device, and may be referred to as a client, a client player, a media player, or a player for short.

Media parameters are parameters that affect play-related actions such as control, selection, transmission, and buffering of media data, and include, but are not limited to, a bit rate, a minimum buffer, a maximum buffer, a buffer threshold, and the like.

The bit rate, namely, a quantity of bits in a data stream per second, indicates data traffic used by a media file in a specified time period. It may be understood that when network bandwidth is fixed, a lower transmission bit rate means that duration of media transmitted by a server to the client in a unit time is longer, in other words, duration of media that can be buffered by the client in a unit time is longer. The duration of the buffered media is play duration of buffered media data. Therefore, when a network status is not good, a freezing phenomenon can be mitigated by appropriately reducing the bit rate.

Minimum buffer: To avoid frequent occurrence of the freezing phenomenon, the media player usually starts playing only when a buffer size (usually in a unit of duration of the buffered media, or may be in a unit of data volume) reaches a threshold. The threshold is referred to as the minimum buffer. In other words, when a data volume in a buffer is not less than the minimum buffer, the player starts to play the media data. It may be understood that when transmission bandwidth and the bit rate are fixed, the frequency of freezing can be reduced by appropriately increasing the minimum buffer when the network status is not good.

Maximum buffer: The client player does not unconditionally and continuously request the media data from the server. Usually, when an existing buffer size (usually in a unit of duration of the buffered media, or may be in a unit of data volume) is not less than a threshold, the client stops requesting the media data from the server. The threshold is referred to as the maximum buffer.

Buffer threshold: When a buffer size of the media player reaches a threshold, the media player starts playing. The threshold is referred to as the buffer threshold. When the UE senses that the network status is about to change or receives the buffer threshold included in the media parameters, the client player may determine, based on the buffer threshold, a threshold for starting playing instead of the minimum buffer.

A future change of the network status may also affect adjustment of a current media parameter. For example, when the network status is about to deteriorate, if a transmission bit rate that is currently requested is appropriately reduced, media data with longer duration can be buffered before the network status deteriorates, and this helps mitigate freezing after the network status deteriorates. If the minimum buffer is appropriately increased, the frequency of freezing can be reduced after the network status deteriorates. When a current buffer is about to reach the maximum buffer, if the maximum buffer is appropriately increased, media data with longer duration can also be buffered before the network status deteriorates, and this helps mitigate freezing after the network status deteriorates. In conclusion, the current media parameter is adjusted based on prediction of a future network status, and this helps improve quality of experience of a user after the network status changes.

In an existing 3GPP standard, network elements such as a PCF network element and an AF network element are supported in obtaining or subscribing to analytics data from an NWDAF network element. The analytics data may include prediction of a network status of specific UE. In the 3GPP standard, currently, UE is not supported in directly obtaining or subscribing to the analytics data from the NWDAF network element, and the UE is also not supported in obtaining the analytics data from another network element. This means that the UE cannot obtain network performance prediction information. Consequently, when the network status is about to deteriorate, the UE cannot adjust a media parameter in advance, and this affects quality of experience of the user. Therefore, embodiments of this application provide the following solutions.

FIG. 3 shows a method for adjusting a media parameter according to an embodiment of this application. The method includes, but is not limited to, the following steps.

Step S301: A first network element sends first information to an NWDAF network element.

For example, the first information is used for obtaining network information. The network information includes network performance prediction information and/or a media parameter, and the network performance prediction information refers to prediction of a future network status of UE. For example, the network performance prediction information includes a network performance information list, and the network performance information list may include one or more of the following: an area subset, an analytics target time period subset, base station status information, base station resource usage, a quantity of UEs, communication performance, mobility performance, and confidence. For details, refer to Table 1. The media parameter may include one or more of the following: a bit rate, a maximum buffer, a minimum buffer, or a buffer threshold. The first network element includes an AMF network element, an SMF network element, or an application network element, and the application network element includes an AF network element or an application server (application server, AS).

**Table 1 Network performance prediction information**

| Information | Description |
|---|---|
| Network performance information list (1...max) | Prediction and analytics in an analytics target time period |
| >Area subset | Tracking area (tracking area, TA) or cell identifier (Cell ID) in a requested area of interest |
| >Analytics target time period subset | Time window for requesting an analytics target time period |
| >gNB (base station) status information | Average proportion of gNBs to be started and run in the area subset during the entire analytics target time period |
| >gNB (base station) resource usage | Average usage (average value and peak value) of allocated resources (CPU, memory, and disk) |
| >Quantity of UEs | Predicted average quantity of UEs in the area subset |
| >Communication performance | Average protocol data unit PDU session setup success rate |
| >Mobility performance | Average handover success rate |
| >Confidence | Confidence of the prediction |

In the foregoing Table 1, in the analytics target time period subset, one or more time windows indicate one or more time periods in which network performance prediction and analytics need to be performed. For example, the time periods are 0:00-12:00 and 14:30-16:30 on February 25, 2021. This indicates that the analytics data is valid in the time periods.

gNB (base station) status information: A base station may be shut down in some time due to reasons such as energy saving. This item analyzes an average proportion of a quantity of base stations that are started and run in the foregoing analytics area to a total quantity of base stations in the area in the foregoing analytics time period. For example, if there are 100 base stations in the foregoing analytics area, and 50 base stations are started and run on average (time average) in the foregoing analytics time period, the gNB status information is 50%.

The gNB (base station) resource usage is an average value and a peak value of average resource usage (a quantity of resources used at each moment/a total quantity of resources of base stations started at the moment) at the moment in the analytics area. For example, at a moment in the analytics time period, a total quantity of resources of all started base stations at the moment is 200 G, and a total quantity of resources used at the moment is 20 G. Average usage of allocated resources at the moment is 10%. In the analytics time period, if an average value of average usage of allocated resources is 20% and a maximum value is 60%, the two values are used as gNB resource usage.

Confidence indicates the reliability of the prediction. To be specific, the confidence is considered as a probability that the prediction is accurate. For example, if the confidence is 90%, it indicates a 90% guarantee that the prediction is accurate.

Optionally, before the first network element sends the first information to the NWDAF network element, the first network element determines a type of the network information. The first network element receives first indication information from the UE.

For example, the first indication information is used for requesting the network information, and the network information includes the network performance prediction information and/or the media parameter. Optionally, before the UE sends the first indication information to the first network element, the UE starts a media player.

For example, the first indication information may further indicate the type of the network information. The type of the network information includes the network performance prediction information and/or the media parameter. In an example, the first indication information indicates that the type of the network information is the network performance prediction information. In another example, the first indication information indicates that the type of the network information is the media parameter. In another example, the first indication information indicates that the type of the network information is the network information and the media parameter.

The first network element may determine the type of the network information in any one of the following manners.

In a first manner, before the first network element sends the first information to the NWDAF network element, the first network element receives the first indication information from the UE, where the first indication information indicates the type of the requested network information. The first network element determines, based on the first indication information, that the type of the network information is the network performance prediction information and/or the media parameter.

Optionally, before the UE sends the first indication information to the first network element, the UE starts the media player.

In a second manner, before the first network element sends the first information to the NWDAF network element, the first network element receives first indication information and type indication information from the UE, where the first indication information indicates to obtain the network information, and the type indication information indicates the type of the network information. The first network element determines, based on the first indication information and the type indication information, that the network information requested by the UE is the network performance prediction information and/or the media parameter.

In a third manner, before the first network element sends the first information to the NWDAF network element, the first network element receives the first indication information from the UE, where the first indication information indicates to obtain the network information. The first network element determines whether the network information requested by the UE is the network performance prediction information or the media parameter. In an example, the first network element determines, based on a default mechanism, the type of the network information requested by the UE. For example, if the network information requested by the UE is the media parameter by default, the first network element determines that the network information requested by the UE is the media parameter. In another example, the first network element locally configures and determines that network information requested by UE that accesses a specific slice and a specific network is the media parameter.

For example, after receiving the first indication information from the UE, the first network element sends the first information to the NWDAF network element. Alternatively, the first network element triggers sending of the first information to the NWDAF network element based on a specific service. To be specific, if the first network element receives the first indication information from the UE, the first network element sends the first information to the NWDAF network element based on the first indication information; or if the first network element does not receive the first indication information from the UE, the first network element trigger sending of the first information to the NWDAF network element based on the specific service. In an example, the first network element receives a media play request from the UE, and then the first network element sends the first information to the NWDAF to obtain the network information. In another example, the first network element receives a media download request from the UE, and the first network element sends the first information to the NWDAF to obtain the network information.

For example, the first information may indicate the type of the network information, and the type may be the network performance prediction information and/or the media parameter. In a possible specific implementation, the first information includes an analytics identifier (Analytics ID). When the first information is used for obtaining the network performance prediction information, Analytics ID = network performance information (Network Performance). When the first information is used for obtaining the media parameter, Analytics ID = media parameter. After receiving the first indication information from the UE, the first network element may trigger sending of the first information to the NWDAF network element.

Optionally, the first information further includes one or more of the following: a terminal identifier, second indication information, or third indication information. The second indication information indicates the NWDAF network element to send the network information to the terminal device corresponding to the terminal identifier. The third indication information indicates the NWDAF network element to send the network information to the first network element. For example, the second indication information and the third indication information may be represented by different values of a same information element.

For example, the second indication information and the third indication information are represented by different values of a notification target address (Notification Target Address), and the notification target address is a parameter that indicates a destination address to which the network information is sent. If the first information includes the second indication information, the value of the notification target address is the terminal identifier; if the first information includes the third indication information, the value of the notification target address is an identifier of the first network element; or if the first information includes the second indication information and the third indication information, the values of the notification target address are the terminal identifier and an identifier of the first network element.

For example, the first information may be carried in a request message or an Nnwdaf_AnalyticsSubscription_Subscribe (Nnwdaf_AnalyticsSubscription_Subscribe) message.

Step S302: The NWDAF network element receives the first information from the first network element.

For example, the first information is used for obtaining the network information. Optionally, the first information may indicate the type of the network information.

Step S303: The NWDAF network element determines the network information.

This step is optional.

For example, the network information includes the network performance prediction information and/or the media parameter. For details, refer to the description in step S301. Details are not described herein again.

For example, the NWDAF may determine the network performance prediction information in the following manner. The NWDAF receives data information from a second network element, and then determines the network performance prediction information based on the data information. The second network element includes one or more of the following network elements: an AMF network element or an SMF network element. The data information is used for determining the network performance prediction information. For example, the data information includes one or more of the following: session bandwidth, user plane delay, and mobility information or positioning information of the UE. When there are a plurality of second network elements, the NWDAF network element may separately request the data information from the network elements. In an example, the second network element is the AMF network element, and the data information may be the mobility information, for example, a cell identifier, of the UE. In another example, the second network element is the SMF network element, and the data information may be the session bandwidth, the user plane delay, or the like.

In an example, the data information is the mobility information or positioning information of the UE. The NWDAF network element may determine a location and a moving track of the UE based on the data information, to predict a location of the UE in a future time period, and predict a network status of the UE in the future time period, to be specific, determine the network performance prediction information. For example, the NWDAF network element determines, based on the mobility information or positioning information of the UE, that the UE moves from a center location of mobile signal coverage of a cell to an edge location, and determines the network performance prediction information, to be specific, the network status of the UE is not good in the future time period. For example, 60 seconds later, the network status of the UE will be not good for 30 seconds.

Optionally, the NWDAF may further determine the media parameter based on the network performance prediction information in the following manner. The NWDAF network element may further obtain media information. For example, the NWDAF network element sends a request message to the application network element to request the media information, then receives the media information from the application network element, and determines the media parameter based on the network performance prediction information and the media information. The media information includes one or more of the following: total media duration, a bit rate, or a frame rate. In an example, the NWDAF determines that the network status of the UE is about to deteriorate, and determines a bit rate based on the media information received from the application network element, where the bit rate is less than the bit rate included in the received media information; and determines a minimum buffer based on information such as the total media duration or the bit rate included in the received media information.

Step S304: The NWDAF network element sends the network information to the UE.

For example, in a possible implementation, the NWDAF network element may directly send the network information to the UE through an interface between the NWDAF network element and the UE.

In another possible implementation, the NWDAF network element sends fourth indication information to the first network element, where the fourth indication information indicates the first network element to send the network information to the UE. In other words, the NWDAF network element may send the network information to the UE through the first network element. Optionally, the NWDAF network element may further send the terminal identifier to the first network element, where the terminal identifier indicates the first network element to send the network information to the terminal device corresponding to the terminal identifier. It should be noted that the fourth indication information may be represented by the terminal identifier.

Optionally, the NWDAF may send the type of the network information to the UE. When the NWDAF sends the network information to the UE through the first network element, the NWDAF may send the type of the network information to the UE through the first network element.

In an example, the NWDAF network element may directly send the analytics identifier (Analytics ID) to the UE or send the analytics identifier to the UE through the first network element. When the network information is the network performance prediction information, the analytics identifier indicates the network performance information (Network Performance); or when the network information is the media parameter, the analytics identifier indicates the media parameter.

In another example, the NWDAF network element sends a notify (notify) message to the first network element, where the notify message includes an analytics identifier, and the analytics identifier indicates "network performance prediction information". The notify message further includes the network performance prediction information. The network performance prediction information indicates that "60 seconds later, the network status of the UE will be not good for 30 seconds".

In another example, the NWDAF network element sends a notify (notify) message to the first network element, where the notify message includes an analytics identifier. The analytics identifier indicates a "media parameter". The notify message further includes the media parameter. The media parameter indicates that "minimum buffer = 10 seconds, and the bit rate = 96 kbit/s".

Step S305: The UE receives the network information from the NWDAF network element.

Step S306: The UE processes media data based on the network information.

For example, if the network information is the media parameter, step S303 to step S306 may be replaced with the following steps. The NWDAF network element determines a first media parameter. The NWDAF network element sends the first media parameter to the first network element. The first network element receives the first media parameter from the NWDAF network element. The first network element determines a second media parameter based on the first media parameter, where the first media parameter and the second media parameter may be the same or may be different. The first network element sends the second media parameter to the UE. The UE receives the second media parameter from the first network element. The UE processes the media data based on the second media parameter. The first media parameter includes at least one of the following: a bit rate, a maximum buffer, a minimum buffer, or a buffer threshold. The second media parameter includes at least one of the following: a bit rate, a maximum buffer, a minimum buffer, or a buffer threshold. In an example, the first network element encapsulates the first media parameter into a message header, to determine the second media parameter.

If the network information is the network performance prediction information, the UE may process the media data based on the network performance prediction information in the following manner. The UE adjusts a bit rate and a minimum buffer in a media parameter of a client based on the network performance prediction information, for example, reduces the bit rate and/or increases the minimum buffer.

In an example, the network performance prediction information indicates that 60 seconds later, the network status of the UE will be not good for 30 seconds, the bit rate in the media parameter of the client is 250 kbit/s, and the minimum buffer is 5 seconds. The UE indicates, based on the network performance prediction information in the network information, that 60 seconds later, the network status of the UE will be not good for 30 seconds. In this case, the terminal device adjusts the bit rate in the media parameter of the client to 50 kbit/s, and adjusts the minimum buffer in the media parameter of the client to 15 seconds.

If the network information is the media parameter, the UE may process the media data based on the media parameter in the following manner.

The UE adjusts the media parameter of the client based on the media parameter in the network information.

In an example, it is assumed that the media parameter in the network information is "Analytics ID = media parameter, the bit rate = 96 kbit/s, and the minimum buffer = 10 seconds", the bit rate in the media parameter of the client is 250 kbit/s, and the minimum buffer is 5 seconds. In this case, the UE adjusts the bit rate in the media parameter of the client to 96 kbit/s, and adjusts the minimum buffer in the media parameter of the client to 10 seconds.

It should be noted that, in the foregoing example, when the network status actually deteriorates, the client may adjust the minimum buffer to the original 5 seconds.

In another example, it is assumed that the media parameter in the network information is "Analytics ID = media parameter, the bit rate = 96 kbit/s, and the buffer threshold = 10 seconds", the bit rate in the media parameter of the client is 250 kbit/s, and the minimum buffer is 5 seconds. In this case, the UE adjusts the bit rate in the media parameter of the client to 96 kbit/s, and adjusts the buffer threshold in the media parameter of the client to 10 seconds. The client enables the buffer threshold to be valid and enables the minimum buffer to be invalid. To be specific, the client plays media when a media buffer size reaches the buffer threshold. It should be noted that, in this example, when the network status actually deteriorates, the client enables the buffer threshold to be invalid and re-enables the minimum buffer to be valid. To be specific, the client plays media when the media buffer size reaches the minimum buffer.

In the foregoing method, the UE may determine a future network status by obtaining the network information from the NWDAF network element, to adjust the current media parameter of the client based on the future network status, or adjust the media parameter of the client based on a media parameter provided by a network side based on the future network status. In this way, occurrence of a freezing phenomenon is reduced after the network status changes and user experience is improved.

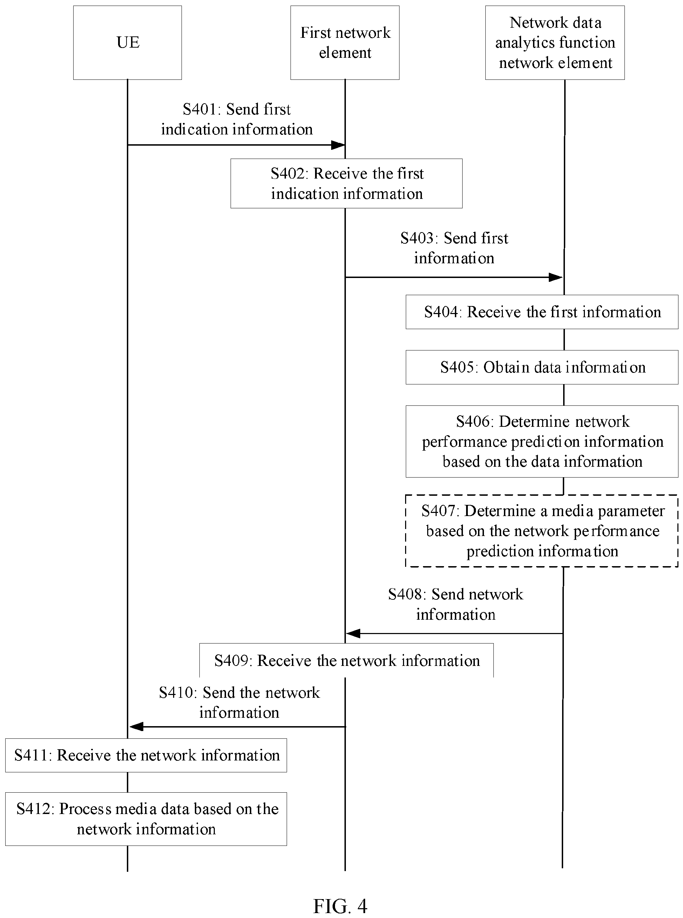

FIG. 4 shows a method for adjusting a media parameter according to an embodiment of this application. The method includes, but is not limited to, the following steps.

Step S401: UE sends first indication information to a first network element.

For example, the first network element may be an AMF network element or an SMF network element. The first indication information is used for requesting network information. A type of the network information includes network performance prediction information or a media parameter. For details, refer to step S301. Details are not described herein again.

For example, the first indication information may be carried in a non-access stratum (non-access stratum, NAS) message. When the first network element is an AMF network element, the NAS message may be a NAS mobility management (mobility management, MM) message. When the first network element is an SMF network element, the NAS message may be a NAS session management (session management, SM) message.

Step S402: The first network element receives the first indication information from the UE.

For example, the first indication information is used for requesting network information. The first indication information further indicates a type of the requested network information. For details, refer to step S301. Details are not described herein again.

Step S403: A first network element sends first information to an NWDAF network element.

For example, the first information is used for requesting network information. For details, refer to step S301. Details are not described herein again.

Step S404: The NWDAF network element receives the first information from the first network element.

For example, the first information is used for requesting network information, and indicates the type of the network information.

Step S405: The NWDAF network element obtains data information.

For example, the data information is used for determining network performance prediction information, and the data information may be session bandwidth, user plane delay, mobility information of the UE, or positioning information of the UE, or the like. This is not limited in embodiments of this application. For details, refer to step S303. Details are not described herein again.

Step S406: The NWDAF network element determines network performance prediction information based on the data information.

For example, refer to step S303, and details are not described herein again.

Step S407: The NWDAF network element determines a media parameter based on the network performance prediction information.

For example, this step is an optional step. For details, refer to step S303. Details are not described herein again.

Step S408: The NWDAF network element sends network information to the first network element.

For example, the network information includes network performance prediction information and/or a media parameter, and the network information may be carried in an Nnwdaf_AnalyticsSubscription_Notify (Nnwdaf_AnalyticsSubscription_Notify) message.

For example, the NWDAF network element may send indication information to the first network element, where the indication information indicates the first network element to send the network information to the terminal device. For details, refer to step S304. Details are not described herein again.

Step S409: The first network element receives the network information from the NWDAF network element.

Step S410: The first network element sends the network information to the UE.

For example, the network information may be carried in a NAS response message.

Step S411: The UE receives the network information from the first network element.

Step S412: The UE processes media data based on the network information.

For details, refer to step S306. Details are not described herein again.

In the foregoing method, the UE may determine a future network status by obtaining the network information from the NWDAF network element, to adjust a media parameter of a client based on the future network status, or adjust the media parameter of the client based on a media parameter provided by a network side based on the future network status. In this way, occurrence of a freezing phenomenon is reduced after the network status changes and user experience is improved.

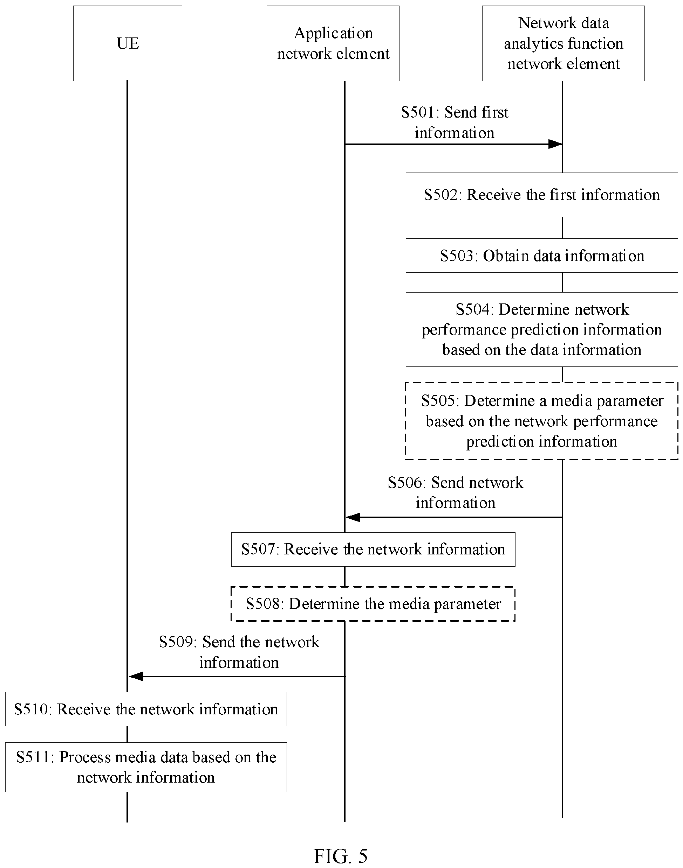

FIG. 5 shows a method for adjusting a media parameter according to an embodiment of this application. The method includes, but is not limited to, the following steps.

Step S501: An application network element sends first information to an NWDAF network element.

For example, the application network element may be an AF network element or an AS. The first information is used for obtaining network information. For details, refer to step S301. Details are not described herein again.

Step S502: The NWDAF network element receives the first information from the application network element.

Step S503: The NWDAF network element obtains data information.

For example, refer to step S303. Details are not described herein again.

Step S504: The NWDAF network element determines network performance prediction information based on the data information.

For example, refer to step S303. Details are not described herein again.

Step S505: The NWDAF network element determines a media parameter based on the network performance prediction information.

For example, this step is an optional step. Refer to step S303. Details are not described herein again.

Step S506: The NWDAF network element sends network information to the application network element.

For example, the network information includes network performance prediction information and/or a media parameter, and the network information may be carried in an Nnwdaf_AnalyticsSubscription_Notify(Nnwdaf_AnalyticsSubscription_Notify) message.

For example, the NWDAF network element may send indication information to the application network element, where the indication information indicates the application network element to send the network information to the terminal device. For details, refer to step S304. Details are not described herein again.

Step S507: The application network element receives the network information from the NWDAF network element.

Step S508: The application network element determines a media parameter based on the network performance prediction information.

For example, this step is an optional step. If the network information received by the application network element from the NWDAF network element is network performance prediction information, the application network element determines the media parameter based on the network performance prediction information.

For example, the application network element determines the media parameter based on the media information and the network performance prediction information. The media information includes one or more of the following: a total media duration, a bit rate, and a frame rate, and the media information is determined by the application network element. For details, refer to step S303. Details are not described herein again.

Step S509: The application network element sends the network information to the UE.

For example, the network information may be carried in an index file or an application layer message, and the index file may be an MPD file, an M3U8 file, or the like. This is not limited herein.

Step S510: The UE receives the network information from the application network element.

For example, the index file or the application layer message includes the network information.

Step S511: The UE processes media data based on the network information.

For example, refer to step S306. Details are not described herein again.

In the foregoing method, the UE may determine a future network status by obtaining the network information from the NWDAF network element, to adjust a media parameter of a client based on the future network status, or adjust the media parameter of the client based on a media parameter provided by a network side based on the future network status. In this way, occurrence of a freezing phenomenon is reduced after the network status changes and user experience is improved.

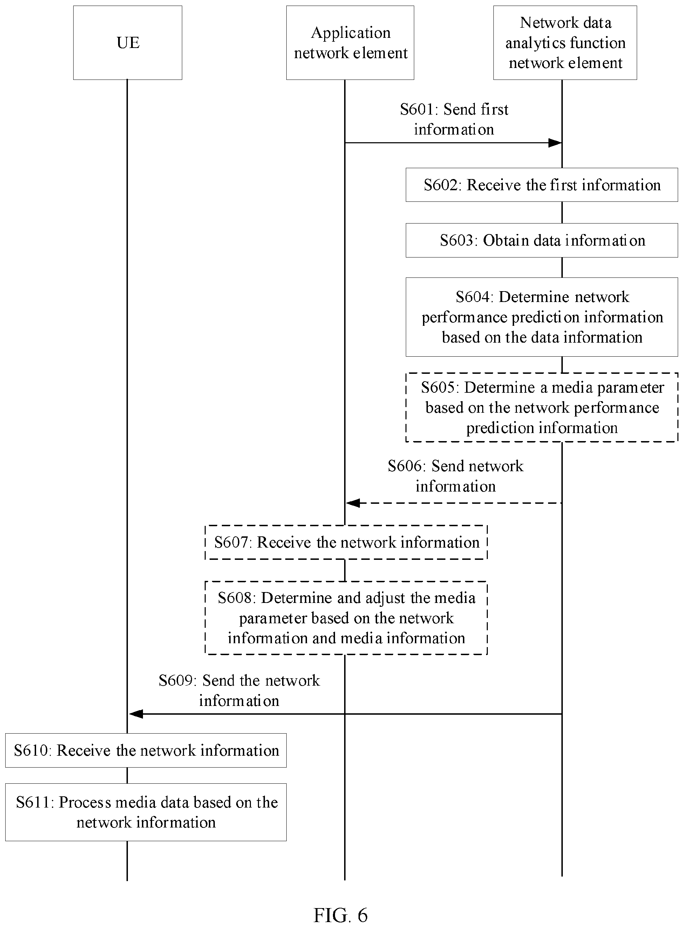

FIG. 6 shows a method for adjusting a media parameter according to an embodiment of this application. The method includes, but is not limited to, the following steps.

Step S601: An application network element sends first information to an NWDAF network element.

For example, the application network element may be an AF network element or an AS, and the first information is used by UE to obtain network information, and optionally, is used by the application network element to obtain network information. That an application network element sends first information to an NWDAF network element may be that the application network element triggers sending of the first information to the NWDAF network element because of a specific service sensed by the application network element. In an example, the application network element receives a media play request sent by the UE, and then the application network element sends the first information to the NWDAF. In an example, the application network element receives a media download request sent by the UE, and then the application network element sends the first information to the NWDAF.

For example, the first information includes one or more of the following: a terminal identifier, second indication information, or third indication information. For details, refer to the description in step S301. Details are not described herein again.

For example, the first information may be carried in a request message or an Nnwdaf_AnalyticsSubscription_Subscribe (Nnwdaf_AnalyticsSubscription_Subscribe) message. For details, refer to step S301. Details are not described herein again.

Step S602: The NWDAF network element receives the first information from the application network element.

Step S603: The NWDAF network element obtains data information.

For details, refer to step S303. Details are not described herein again.

Step S604: The NWDAF network element determines network performance prediction information based on the data information.

For details, refer to step S303. Details are not described herein again.

Step S605: The NWDAF network element determines a media parameter based on the network performance prediction information.

For example, this step is an optional step. Refer to step S303. Details are not described herein again.

Step S606: The NWDAF network element sends network information to the application network element.

For example, this step is an optional step. When the first information includes the third indication information, the NWDAF network element sends the network information to the application network element. The network information may be carried an Nnwdaf_AnalyticsSubscription_Notify(Nnwdaf_AnalyticsSubscription_Notify) message.

For example, the NWDAF network element may further send indication information to the application network element, where the indication information indicates the application network element to send the network information to the UE.

Step S607: The application network element receives the network information from the NWDAF network element.

For example, this step is an optional step.

Step S608: The application network element determines and adjusts the media parameter based on the network information and media information.

For example, this step is an optional step. The media information is sensed by the application network element. The media information includes one or more of the following: total media duration, a bit rate, or a frame rate. For a process in which the application network element determines the media parameter based on the network information and the media information, refer to a process in which the NWDAF network element determines the media parameter based on the network information and the media information. For details, refer to step S303. Details are not described herein again. It should be noted that, in this step, the media parameter determined and adjusted by the application network element should be a media parameter that can be independently adjusted on a server side, for example, a bit rate. For a media parameter that needs to be adjusted on a UE side, for example, a minimum buffer, this step does not determine or adjust the media parameter.

Step S609: The NWDAF network element sends the network information to UE.

For example, step S609 may not be performed after step S607 and step S608 are performed. The NWDAF network element may send the network information to the UE in a plurality of manners. For example, a new interface may be defined between the NWDAF network element and the UE. The interface may be on a control plane or a user plane, and the NWDAF network element directly sends the network information to the UE through the interface. Certainly, in addition to directly sending the network information to the UE through the interface, the NWDAF network element may alternatively indirectly send the network information to the UE through another network element. Details are as follows:

In an optional manner, the NWDAF network element sends the network information and indication information to the AMF network element, where the indication information indicates the AMF network element to send the network information to the UE. After receiving the network information and the indication information, the AMF network element sends the network information to the UE.

In another optional manner, the NWDAF network element sends the network information and indication information to the SMF network element, where the indication information indicates the SMF network element to send the network information to the UE. After receiving the network information and the indication information, the SMF network element sends the network information to the UE.

For example, a manner in which the AMF/SMF network element sends the network information to the UE may be as follows:

In a first manner, the AMF/SMF network element sends the network information to the UE, where the network information may be carried in a NAS message.

In a second manner, the AMF/SMF network element sends the network information to a RAN. The network information is carried in an N2 session request message. Optionally, the N2 session request message may include indication information indicating the RAN to send the network information to the UE. Correspondingly, after receiving the network information from the application network element, the RAN sends the network information to the UE. The network information may be carried in a radio resource control (radio resource control, RRC) message.

In a third manner, the SMF network element indicates a UPF network element to send the network information to the UE through a user plane packet. For example, the SMF network element may send an N4 session modification request and the network information to the UPF network element, to indicate the UPF to construct a user plane packet including the network information, and send the packet to the UE through a user plane.

Step S610: The UE receives the network information from the NWDAF network element.

For example, the UE may directly receive the network information from the NWDAF network element through an interface between the NWDAF network element and the UE, or may indirectly receive the network information from the NWDAF network element through another network element. A manner of indirect receiving through another network element is described in step S609, and details are not described herein again.

Step S611: The UE processes media data based on the network information.

For example, refer to step S306. Details are not described herein again.

It should be noted that there is no execution sequence between steps S606 to S608 and steps S609 to S611.

In the foregoing method, the UE may determine a future network status by obtaining the network information from the NWDAF network element, to adjust a media parameter of a client based on the future network status, or adjust the media parameter of the client based on a media parameter provided by a network side based on the future network status. In this way, occurrence of a freezing phenomenon is reduced after the network status changes and user experience is improved.

The methods in embodiments of this application are described above in detail, and apparatuses in embodiments of this application are provided below.

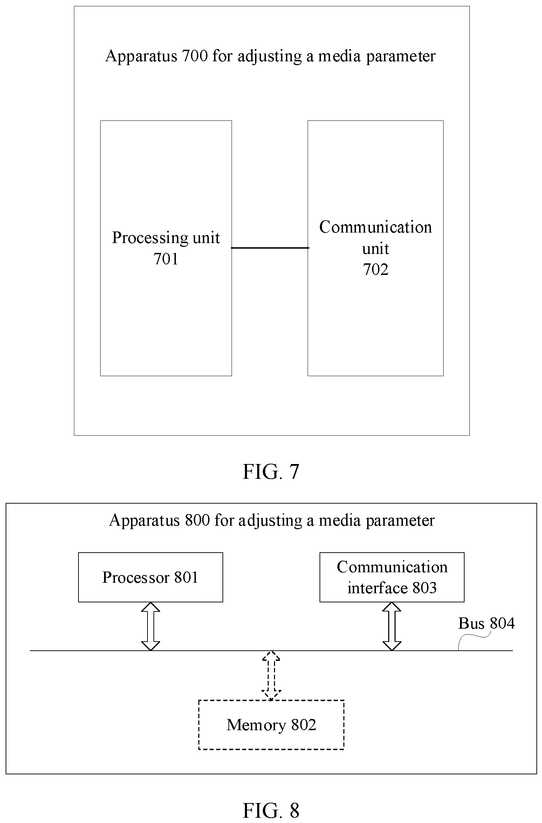

FIG. 7 is a schematic diagram of a structure of an apparatus 700 for adjusting a media parameter according to an embodiment of this application. The apparatus may include a processing unit 701 and a communication unit 702. For example, the processing unit 701 and the communication unit 702 in the apparatus are configured to implement functions of the user equipment in the foregoing method. Detailed descriptions of the units are as follows:

The processing unit 701 is configured to obtain network information from a network data analytics function network element, where the network information includes one or more of the following: network performance prediction information or a media parameter, the network performance prediction information indicates prediction of a network status, and the media parameter is used for controlling, selecting, transmitting, or buffering media data. The processing unit 701 is further configured to process the media data based on the network information.

In the foregoing method, the apparatus may obtain the network information from the network data analytics function network element, and adjust a media parameter of a client in advance based on the network performance prediction information in the network information when the network status is about to deteriorate, or directly adjust the media parameter of the client based on the media parameter in the network information, to reduce occurrence of a freezing phenomenon and improve user experience.

In a possible implementation, the apparatus further includes a communication unit 702. The communication unit 702 is configured to send first indication information to a first network element, where the first indication information indicates to request the network information, the first network element includes an access and mobility management function network element, a session management function network element, or an application network element, and the application network element includes an application function network element or an application server. The communication unit 702 is further configured to receive the network information from the first network element.

In the foregoing method, the apparatus may quickly trigger, by sending the first indication information to the first network element, the first network element to subscribe to the network information from the network data analytics function network element.

In another possible implementation, the first indication information further indicates a type of the network information.

In the foregoing method, the apparatus sends the first indication information to the first network element. Correspondingly, after receiving the first indication information, the first network element may quickly determine the type of the network information based on the first indication information, to reduce signaling overheads.

In another possible implementation, the communication unit 702 is further configured to send about a type of the network information to first network element.

In the foregoing method, the apparatus sends the information about the type of the network information to the first network element through the user equipment, so that the first network element can quickly determine that the user equipment requires the network performance prediction information and/or the media parameter, to quickly make a response.

In another possible implementation, the media parameter includes one or more of the following: a bit rate, a maximum buffer, a minimum buffer, or a buffer threshold.

It should be noted that, for implementations and beneficial effects of the units, refer to corresponding descriptions in the method embodiment shown in FIG. 3.

FIG. 7 is a schematic diagram of a structure of an apparatus 700 for adjusting a media parameter according to an embodiment of this application. The apparatus may include a processing unit 701 and a communication unit 702. For example, the processing unit 701 and the communication unit 702 in the apparatus are configured to implement functions of the NWDAF network element in the foregoing method. Detailed descriptions of the units are as follows:

The communication unit 702 is configured to receive first information from a first network element, where the first information is used for obtaining network information, the network information includes one or more of the following: network performance prediction information or a media parameter, the network performance prediction information indicates prediction of a network status, the media parameter is used for controlling, selecting, transmitting, or buffering media data, the first network element includes an access and mobility management function network element, a session management function network element, or an application network element, and the application network element includes an application function network element or an application server. The communication unit 702 is further configured to send the network information to a terminal device.

In the foregoing method, after receiving the first information from the first network element, the apparatus determines the network information, and then sends the network information to the terminal device. Correspondingly, after receiving the network information, the terminal device may adjust a media parameter of a client in advance based on the network performance prediction information in the network information when the network status is about to deteriorate, or directly adjust the media parameter of the client based on the media parameter in the network information, to reduce occurrence of a freezing phenomenon and improve user experience.

In a possible implementation, the media parameter includes one or more of the following: a bit rate, a maximum buffer, a minimum buffer, or a buffer threshold.

In another possible implementation, the apparatus further includes a processing unit 701, and the processing unit 701 is configured to determine the media parameter.

In another possible implementation, the communication unit 702 is further configured to receive media information from the application network element, where the media information includes one or more of the following: total media duration, a bit rate, or a frame rate. The processing unit 701 is configured to determine the media parameter based on the network performance prediction information and the media information.

In another possible implementation, the communication unit 702 is further configured to send a request message to the application network element to request the media information.

In another possible implementation, the first information includes an analytics identifier.

In another possible implementation, the first information includes one or more of the following: a terminal identifier, second indication information, or third indication information, the second indication information indicates to send the network information to the terminal device corresponding to the terminal identifier, and the third indication information indicates to send the network information to the first network element.

In the foregoing method, after receiving the first information from the first network element, the apparatus may quickly make a response based on content included in the first information, and send the network information to the terminal device and/or the first network element corresponding to the terminal identifier, thereby reducing a processing delay.

In another possible implementation, the communication unit 702 is further configured to send fourth indication information to the first network element, where the fourth indication information indicates the first network element to send the network information to the terminal device.

In the foregoing method, the apparatus sends the network information to the terminal device through the first network element, so that the terminal device adjusts the media parameter of the client, to reduce a freezing phenomenon and improve user experience.

It should be noted that, for implementations and beneficial effects of the units, refer to corresponding descriptions in the method embodiment shown in FIG. 3.

FIG. 7 is a schematic diagram of a structure of an apparatus 700 for adjusting a media parameter according to an embodiment of this application. The apparatus may include a processing unit 701 and a communication unit 702. For example, the processing unit 701 and the communication unit 702 in the apparatus are configured to implement functions of the application network element in the foregoing method. Detailed descriptions of the units are as follows:

The processing unit 701 is configured to determine a media parameter, where the media parameter is used for controlling, selecting, transmitting, or buffering media data. The communication unit 702 is configured to send the media parameter to a terminal device.

In the foregoing method, the apparatus determines the media parameter, and then sends the media parameter to the terminal device, so that the terminal device adjusts a media parameter of a client based on the media parameter, to reduce a freezing phenomenon and improve user experience.

In a possible implementation, the communication unit 702 is configured to receive network performance prediction information from a network data analytics function network element, where the network performance prediction information indicates prediction of a network status. The processing unit is configured to determine the media parameter based on the network performance prediction information and media information, where the media information includes one or more of the following: total media duration, a bit rate, or a frame rate.

It should be noted that, for implementations and beneficial effects of the units, refer to corresponding descriptions in the method embodiment shown in FIG. 6.

FIG. 7 is a schematic diagram of a structure of an apparatus 700 for adjusting a media parameter according to an embodiment of this application. The apparatus may include a processing unit 701 and a communication unit 702. For example, the processing unit 701 and the communication unit 702 in the apparatus are configured to implement functions of the first network element in the foregoing method. Detailed descriptions of the units are as follows:

The processing unit 701 is configured to send first information to a network data analytics function network element through a communication unit 702, where the first information is used for obtaining network information, the network information includes one or more of the following: network performance prediction information or a first media parameter, the network performance prediction information indicates prediction of a network status, the first network element includes an access and mobility management function network element, a session management function network element, or an application network element, and the application network element includes an application function network element or an application server. The communication unit 702 is configured to receive the first media parameter from the network data analytics function network element, where the first media parameter is used for controlling, selecting, transmitting, or buffering media data. The communication unit 702 is configured to send a second media parameter to a terminal device, where the second media parameter is determined based on the first media parameter, and the second media parameter is used for controlling, selecting, transmitting, or buffering the media data.

In the foregoing method, the apparatus sends the first information to the network data analytics function network element, to subscribe to the network information, receives the first media parameter from the network data analytics function network element, determines the second media parameter based on the first media parameter, and sends the second media parameter to the terminal device, so that the terminal device adjusts a media parameter of a client based on the second media parameter, to reduce a freezing phenomenon and improve user experience.

It should be noted that, for implementations and beneficial effects of the modules, refer to corresponding descriptions in the method embodiment shown in FIG. 4.

FIG. 7 is a schematic diagram of a structure of an apparatus 700 for adjusting a media parameter according to an embodiment of this application. The apparatus may include a processing unit 701 and a communication unit 702. For example, the processing unit 701 and the communication unit 702 in the apparatus are configured to implement functions of the NWDAF network element in the foregoing method. Detailed descriptions of the units are as follows:

The processing unit 701 is configured to receive first information from a first network element through the communication unit 702, where the first information is used for obtaining network information, the network information includes one or more of the following: network performance prediction information or a first media parameter, the network performance prediction information indicates prediction of a network status, the first network element includes an access and mobility management function network element, a session management function network element, or an application network element, and the application network element includes an application function network element or an application server. The communication unit 702 is configured to send the first media parameter to the first network element, where the first media parameter is used for controlling, selecting, transmitting, or buffering media data, and the first media parameter is used by the first network element to determine a second media parameter, and the second media parameter is used by a terminal device to control, select, transmit, or buffer the media data.

In the foregoing method, the apparatus receives the first information from the first network element, and then sends the first media parameter to the first network element, and then the first network element determines the second media parameter based on the first media parameter, and sends the second media parameter to the terminal device, so that the terminal device adjusts a media parameter of a client based on the second media parameter, to reduce a freezing phenomenon and improve user experience.

It should be noted that, for implementations and beneficial effects of the modules, refer to corresponding descriptions in the method embodiment shown in FIG. 4.

FIG. 8 shows an apparatus 800 for adjusting a media parameter according to an embodiment of this application. The apparatus 800 includes at least one processor 801 and a communication interface 803. Optionally, the apparatus 800 further includes a memory 802. The processor 801, the memory 802, and the communication interface 803 are connected to each other by a bus 804.

The memory 802 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store a related computer program and data. The communication interface 803 is configured to receive and send data.

The processor 801 may be one or more central processing units (central processing unit, CPU). When the processor 801 is one CPU, the CPU may be a single-core CPU or a multi-core CPU.

The processor 801 in the apparatus 800 is configured to read computer program code stored in the memory 802, to implement functions of the processing unit 701. The communication interface 803 is configured to implement functions of the communication unit 702.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

All or some of the foregoing embodiments may be implemented by software, hardware, firmware, or any combination thereof. When the software is used to implement embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/Or" is an association relationship for describing associated objects, and represents that three relationships may exist. For example, A and/or B may represent the following cases: Only A exists, both A and B exist, and only B exists, where A and B may be in a singular form or a plural form. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A method for adjusting a media parameter, comprising:
obtaining, by a terminal device, network information from a network data analytics function network element, wherein the network information comprises one or more of the following: network performance prediction information or a media parameter, the network performance prediction information indicates prediction of a network status, and the media parameter is used for controlling, selecting, transmitting, or buffering media data; and
processing, by the terminal device, the media data based on the network information.

2. The method according to claim 1, wherein the obtaining, by a terminal device, network information from a network data analytics function network element comprises:
sending, by the terminal device, first indication information to a first network element, wherein the first indication information indicates to request the network information, the first network element comprises an access and mobility management function network element, a session management function network element, or an application network element, and the application network element comprises an application function network element or an application server; and
receiving, by the terminal device, the network information from the first network element.

3. The method according to claim 2, wherein the first indication information further indicates a type of the network information.

4. The method according to claim 2, wherein the terminal device sends information about a type of the network information to the first network element.

5. The method according to any one of claims 1 to 4, wherein
the media parameter comprises one or more of the following: a bit rate, a maximum buffer, a minimum buffer, or a buffer threshold.

6. A method for adjusting a media play parameter, comprising:
receiving, by a network data analytics function network element, first information from a first network element, wherein the first information is used for obtaining network information, the network information comprises one or more of the following: network performance prediction information or a media parameter, the network performance prediction information indicates prediction of a network status, the media parameter is used for controlling, selecting, transmitting, or buffering media data, the first network element comprises an access and mobility management function network element, a session management function network element, or an application network element, and the application network element comprises an application function network element or an application server; and
sending, by the network data analytics function network element, the network information to a terminal device.

7. The method according to claim 6, wherein
the media parameter comprises one or more of the following: a bit rate, a maximum buffer, a minimum buffer, or a buffer threshold.

8. The method according to claim 6 or 7, wherein the method further comprises:
determining, by the network data analytics function network element, the media parameter.

9. The method according to claim 8, wherein the determining, by the network data analytics function network element, the media parameter comprises:
receiving, by the network data analytics function network element, media information from the application network element, wherein the media information comprises one or more of the following: total media duration, a bit rate, or a frame rate; and
determining, by the network data analytics function network element, the media parameter based on the network performance prediction information and the media information.

10. The method according to claim 9, wherein the method further comprises:
sending, by the network data analytics function network element, a request message to the application network element to request the media information.

11. The method according to any one of claims 6 to 10, wherein
the first information comprises an analytics identifier.

12. The method according to any one of claims 6 to 11, wherein
the first information comprises one or more of the following: a terminal identifier, second indication information, or third indication information, the second indication information indicates to send the network information to the terminal device corresponding to the terminal identifier, and the third indication information indicates to send the network information to the first network element.

13. The method according to any one of claims 6 to 12, wherein the method further comprises:
sending, by the network data analytics function network element, fourth indication information to the first network element, wherein the fourth indication information indicates the first network element to send the network information to the terminal device.

14. An apparatus for adjusting a media parameter, comprising:
a processing unit, configured to obtain network information from a network data analytics function network element, wherein the network information comprises one or more of the following: network performance prediction information or a media parameter, the network performance prediction information indicates prediction of a network status, and the media parameter is used for controlling, selecting, transmitting, or buffering media data, wherein
the processing unit is further configured to process the media data based on the network information.

15. The apparatus according to claim 14, wherein the apparatus further comprises a communication unit;
the communication unit is configured to send first indication information to a first network element, wherein the first indication information indicates to request the network information, the first network element comprises an access and mobility management function network element, a session management function network element, or an application network element, and the application network element comprises an application function network element or an application server; and
the communication unit is further configured to receive the network information from the first network element.

16. The apparatus according to claim 15, wherein the first indication information further indicates a type of the network information.

17. The apparatus according to claim 15, wherein the communication unit is further configured to send information about a type of the network information to the first network element.

18. The apparatus according to any one of claims 14 to 17, wherein
the media parameter comprises one or more of the following: a bit rate, a maximum buffer, a minimum buffer, or a buffer threshold.

19. An apparatus for adjusting a media parameter, comprising:
a communication unit, configured to receive first information from a first network element, wherein the first information is used for obtaining network information, the network information comprises one or more of the following: network performance prediction information or a media parameter, the network performance prediction information indicates prediction of a network status, the media parameter is used for controlling, selecting, transmitting, or buffering media data, the first network element comprises an access and mobility management function network element, a session management function network element, or an application network element, and the application network element comprises an application function network element or an application server, wherein
the communication unit is further configured to send the network information to a terminal device.

20. The apparatus according to claim 19, wherein
the media parameter comprises one or more of the following: a bit rate, a maximum buffer, a minimum buffer, or a buffer threshold.

21. The apparatus according to claim 19 or 20, wherein the apparatus further comprises a processing unit; and
the processing unit is configured to determine the media parameter.

22. The apparatus according to claim 21, wherein
the communication unit is further configured to receive media information from the application network element, wherein the media information comprises one or more of the following: total media duration, a bit rate, or a frame rate; and
the processing unit is configured to determine the media parameter based on the network performance prediction information and the media information.

23. The apparatus according to claim 22, wherein
the communication unit is further configured to send a request message to the application network element to request the media information.

24. The apparatus according to any one of claims 19 to 23, wherein
the first information comprises an analytics identifier.

25. The apparatus according to any one of claims 19 to 24, wherein
the first information comprises one or more of the following: a terminal identifier, second indication information, or third indication information, the second indication information indicates to send the network information to the terminal device corresponding to the terminal identifier, and the third indication information indicates to send the network information to the first network element.

26. The apparatus according to any one of claims 19 to 25, wherein
the communication unit is further configured to send fourth indication information to the first network element, wherein the fourth indication information indicates the first network element to send the network information to the terminal device.

27. An apparatus for adjusting a media parameter, wherein the apparatus comprises at least one processor and a communication interface, and the at least one processor is configured to invoke a computer program stored in at least one memory, to enable the apparatus to implement the method according to any one of claims 1 to 5.

28. An apparatus for adjusting a media parameter, wherein the apparatus comprises at least one processor and a communication interface, and the at least one processor is configured to invoke a computer program stored in at least one memory, to enable the apparatus to implement the method according to any one of claims 6 to 13.

29. A system for adjusting a media parameter, wherein the system comprises the apparatus for adjusting a media parameter according to claim 14 or 27 and the apparatus for adjusting a media parameter according to claim 19 or 28.

30. A chip system, wherein the chip system comprises at least one processor and a communication interface, and the at least one processor is configured to invoke a computer program stored in at least one memory, to implement the method according to any one of claims 1 to 13.

31. A computer-readable storage medium, wherein the computer-readable storage medium stores program instructions, and when the program instructions are run on a processor, the method according to any one of claims 1 to 13 is implemented.

32. A computer program product, wherein when the computer program product runs on a processor, the method according to any one of claims 1 to 13 is implemented.
